# EUROPÄISCHE PATENTANMELDUNG

(11) **EP 2 027 962 A1**
(43) Veröffentlichungstag der Anmeldung: **25.02.2009**
(21) Anmeldenummer: 08162535.2
(22) Anmeldetag: 18.08.2008
(51) Int. Cl.: B23K 9/028, B23K 9/095, B23K 9/12

(54) **Schweißgerät und -verfahren zum Orbitalschweißen von Rohren**

(30) Priorität: 17.08.2007 DE 202007011584 U
(71) Anmelder: Interforge Klee GmbH, 27356 Rotenburg/Wümme (DE)
(72) Erfinder: Härtel, Frank, 21514 Büchen (DE); Röllke, Hans-Peter, 35708 Haiger (DE); Klee, Klaus F., 27356 Rotenburg/W. (DE)
(74) Vertreter: Eisenführ, Speiser & Partner

(57) **Zusammenfassung**

Die Erfindung betrifft ein Lichtbogen- Schweißgerät zum Orbitalschweißen von Rohren, umfassend einen Schweißkopf (201) zur Aufbringung eines Schweißlichtbogens (203) mit einer Schweißleistung auf eine Fügestelle zwischen einem ersten (101) und zweiten (102) Werkstück zur Erzeugung eines Schweißbades (301), wobei der Schweißlichtbogen (203) relativ zu dem ersten (101) und zweiten (102) Werkstück bewegbar ist. Erfindungsgemäß ist vorgesehen, dass das Schweißgerät eine Temperaturmessvorrichtung (401) zur Messung einer Temperatur im Umfeld des Schweißbades (301) und eine Regelungseinrichtung umfasst, wobei die Regelungseinrichtung ausgebildet ist, in Abhängigkeit von der gemessenen Temperatur zumindest ein Signal zu generieren, welches zur Steuerung von zumindest einem Schweißparameter dient.

## Beschreibung

Die Erfindung betrifft ein Lichtbogen- Schweißgerät zum Orbitalschweißen von Rohren, umfassend einen Schweißkopf zur Aufbringung eines Schweißlichtbogens mit einer Schweißleistung auf eine Fügestelle zwischen einem ersten und zweiten Werkstück zur Erzeugung eines Schweißbades, wobei der Schweißlichtbogen relativ zu dem ersten und zweiten Werkstück bewegbar ist.

Weiterhin betrifft die Erfindung ein Verfahren zur Steuerung eines Lichtbogen-Schweißgerätes zum Orbitalschweißen von Rohren.

Weiterhin betrifft die Erfindung ein Lichtbogen-Schweißverfahren zum Orbitalschweißen von Rohren.

Nach dem Stand der Technik ist bei manuellem Schweißen die Qualität der Schweißnaht in hohem Maße abhängig von den Fertigkeiten und der Qualifikation des Schweißers. Durch Automatisierung von Teilen oder des ganzen Schweißprozesses wird die Abhängigkeit der Qualität der Schweißverbindung vom Bediener reduziert. Dies geschieht durch eine Automatisierung von Schweißparametern, beispielsweise in dem die Stromstärke, Vorschubgeschwindigkeit des Schweißkopfs oder Abstand des Schweißkopfs zum Werkstück konstant gehalten wird.

Trotz dieser Maßnahmen ist die Qualität der entstehenden Schweißnähte weiterhin verbesserungsfähig. Insbesondere bei komplexen Schweißaufgaben, wie dem Orbitalschweißen von Rohren mit waagerechten Schweißpositionen, Steig-und Fallnähten sowie Überkopfpositionen, verbunden mit einer sich entlang der Schweißnaht ändernden Schwerkrafteinwirkung auf das Schweißbad, ist die Abstimmung der Schweißparameter auf die jeweilige Position komplex und fehleranfällig, insbesondere bei Positionswechseln. Daher kommt es häufig zu einer suboptimalen Qualität der Schweißnähte, beispielsweise durch Binde- und Formfehler.

Mit Bezug auf das Orbitalschweißen ist aus der US 5,440, 090 bekannt, dass die zum manuellen Schweißen von Stahlrohren erforderliche Schweißzeit reduziert werden kann, indem die Wurzellage mit einem Schweißstab eines ersten Durchmessers geschweißt wird, weitere Lagen mit Schweißstäben von größerem Durchmesser geschweißt werden und die Schweißnaht mit vollentsalztem Wasser gekühlt wird, um die Temperatur zwischen den Schweißlagen auf ca. 300°F oder weniger zu begrenzen. In Versuchen konnte das Erreichen der Temperaturreduzierung aufgrund der Kühlung durch Messen der Temperatur zwischen den Schweißlagen mittels eines Pyrometers bestätigt werden. Nachteilig hieran ist jedoch, dass eine solche Wasserkühlung und das manuelle Schweißen in mehreren Lagen für viele Orbitalschweißaufgaben nicht anwendbar sind. Weiterhin nachteilig ist, dass das genannte Verfahren zwar die erforderliche Schweißzeit reduzieren soll, aber keine Verbesserung der Qualität der Schweißnaht erzielt.

Weiterhin ist bekannt, die Orbitalschweißnaht in vier oder acht Segmente aufzuteilen und die Schweißparameter für jedes der Segmente vorzuprogrammieren. Dies hat jedoch den Nachteil, dass dazu die Startposition des Schweißprozesses erstens bekannt sein muss und zweitens bei der Ausführung exakt eingehalten werden muss. Soll eine andere als die programmierte Startposition gewählt werden, erfordert dies eine neue Programmierung der Schweißparameter in Abhängigkeit dieser neuen Startposition. Wird eine programmierte Startposition beim Schweißvorgang nicht exakt eingehalten, führt dies zu einer suboptimalen Qualität der Schweißnaht, beispielsweise durch Binde- und Formfehler.

Die DE 102 21 023 A1 gibt in allgemeiner Form ein Verfahren und eine Anordnung zur Qualitätssicherung bei Schweißprozessen an und geht dabei davon aus, dass für eine definierte Gefügeausbildung und eine gewünschte Geometrie im Schweißnahtquerschnitt idealerweise der Schweißvorgang mit definierten Schweißparametern durchgeführt wird. Um Abweichungen von diesen Idealbedingungen aufgrund von unerfahrenem Personal, Verschleiß der Schweißstromquelle, unkontrolliert entstandenen Übergangswiderständen oder Wicklungsschlüssen auszugleichen, schlägt DE 102 21 023 A1 die Auswertung von Schweiß- und/oder Umgebungsparametern (Schweißspannung, Schweißstrom, Lichtbogenlänge, Pulskennwerten, Vorschubgeschwindigkeit des Drahtes, Werkstücktemperatur, Schutzgasmenge und Schweißgeschwindigkeit) vor. Die Auswertung umfasst einen Vergleich mit vorgebbaren Daten und es erfolgt eine Regelung von Einstellgrößen der für den Schweißprozess genutzten Schweißstromquelle unter Nutzung der Auswertungsergebnisse. Auch diese Lösung beruht jedoch auf der konventionellen Lehre, dass die für eine qualitätsoptimierte Schweißnaht erforderlichen Schweißparameter bekannt sind und vordefiniert werden. Für eine Orbitalschweißaufgabe würde dies bedeuten, in Abhängigkeit von einer fixierten Startposition und verschiedener Segmente Parameter vorzugeben, was mit den oben genannten Nachteilen verbunden ist. Nachteilig ist weiterhin, dass die Lehre der DE 102 21 023 A1 keine Verbesserung der Probleme bewirkt, die aufgrund sich entlang der Schweißnaht ändernder Schweißbedingungen beim Orbitalschweißen von Rohren entstehen.

DE 1 930 154 C offenbart, zur Gewährleistung einer ordnungsgemäßen Verschweißung beim automatischen Schweißen eine Abtastvorrichtung vorzusehen, die Breite und Tiefe der Schweißfuge misst und mit diesen Messwerten die Schweißgutmenge je Längeneinheit der Schweißfuge zu steuern. Hierzu wird beschrieben, dass insbesondere in Überkopfpositionen Ungenauigkeiten bei der Kantenvorbereitung den Nahtquerschnitt beeinflussen und in nachteiliger Weise zu Schweißnahtüber- oder -unterhöhungen führen können. Diese Lehre hat allerdings den Nachteil, nur für Wannenlagen- und Überkopfpositionen, nicht jedoch für die sich kontinuierlich ändernden Schweißpositionen beim Orbitalschweißen geeignet zu sein und hierfür auch keine qualitätsverbessernde Lösung anzubieten.

Auch DE 34 03 253 A1 zielt darauf ab, beim Schweißen linearer Fugen ein unregelmäßiges Schweißfugenprofil zu kompensieren und beruht auf dem Prinzip, vor dem Schweißelement mittels eines Pyrometers ein Temperaturprofil entlang einer quer zum Werkstückstoß verlaufenden Abtastlinie aufzunehmen, um exakt die Breite der Werkstückfuge durch eine Lokalisierung der genauen Lage der beiden Kanten entlang der Abtastlinie zu bestimmen. Diese Kompensation eines unregelmäßigen Schweißfugenprofils hat jedoch den Nachteil, die beim Orbitalschweißen zusätzlich auftretenden, die Qualität der Schweißnaht beeinflussenden Veränderungen in Abhängigkeit der Schweißposition nicht zu berücksichtigen und damit auch nicht kompensieren zu können.

Zusätzlich ist es in vielen Schweißaufgaben nicht oder nur sehr schlecht möglich, den Schweißprozess und das Schweißergebnis durch eine Person direkt zu überwachen, da der Raum für eine solche Überprüfung fehlt, wie beispielsweise beim Orbitalschweißen von Rohren am Einbauort, die häufig nur von einer Seite aus zugänglich sind.

Es ist daher die Aufgabe der vorliegenden Erfindung, einen oder mehrere der genannten Nachteile beim Orbitalschweißen von Rohren zu verringern oder zu beseitigen.

Diese Aufgabe wird erfindungsgemäß dadurch gelöst, dass das Schweißgerät eine Temperaturmessvorrichtung zur Messung einer Temperatur im Umfeld des Schweißbades und eine Regelungseinrichtung umfasst, wobei die Regelungseinrichtung ausgebildet ist, in Abhängigkeit von der gemessenen Temperatur zumindest ein Signal zu generieren, welches zur Steuerung von zumindest einem Schweißparameter dient.

Die Erfindung ermöglicht es, einen oder mehrere Schweißparameter temperaturabhängig zu steuern. Idealerweise richtet sich die Steuerung der Schweißparameter nach der Temperatur des Schweißbades. Die Schweißbadtemperatur beeinflusst das Schmelzen der zu verschweißenden Werkstücke an der Verbindungsstelle, das Abschmelzen ggf. zugeführter Zusatzwerkstoffe sowie die an der Verbindungsstelle entstehende Gefügeänderung der Werkstoffe. Die Schweißbadtemperatur ist daher für die Qualität der Schweißverbindung von besonderer Bedeutung.

Diese Schweißbadtemperatur selbst ist jedoch nur mit erheblichem Aufwand und auch dann nicht in der erforderlichen Genauigkeit direkt messbar. Erfindungsgemäß wird daher eine Temperatur im Umfeld des Schweißbades gemessen und zur Steuerung der Schweißparameter verwendet. Ziel der Temperaturmessung im Umfeld des Schweißbades ist es, einen Rückschluss auf die eigentliche Schweißbadtemperatur zuzulassen. Es wird davon ausgegangen, dass eine Änderung der Schweißbadtemperatur auch eine Änderung der Temperatur im Umfeld des Schweißbades bewirkt. Da, ausgehend von einer adäquaten Schweißbadtemperatur, insbesondere unerwünschte Änderungen dieser Temperatur, wie Abkühlung oder Überhitzung beispielsweise aufgrund von Störgrößeneinflüssen, verhindert werden sollen, kann dies auch über eine Messung der Temperatur und ihrer Änderungen im Umfeld des Schweißbades erfolgen.

Umfeld des Schweißbades meint in der vorliegenden Erfindung einen an das Schweißbad angrenzenden Bereich, der wie das Schweißbad selbst durch die Einwirkung des Lichtbogens unmittelbar oder mittelbar erhitzt wird, wenn auch auf einem niedrigeren Temperaturniveau, und dessen Temperatur sich in einem bestimmten Zusammenhang mit derjenigen des Schweißbades verändert, wenn auch auf niedrigerem Temperaturniveau. Ein solcher Bereich ist beispielsweise eine ringförmige Fläche mit einer Ausdehnung von etwa 30% des Schweißbaddurchmessers um das Schweißbad herum. Insbesondere hat sich ein Abstand von ca. 5mm vom Rand des Schweißbades als für die Temperaturmessung geeignet erwiesen. Aufgrund der thermischen Leitfähigkeit der zu verschweißenden Werkstücke lässt die Temperatur der Werkstücke in diesem Schweißbadumfeld Rückschlüsse sowohl auf die Temperatur des Schweißbades als auch auf dessen Temperaturänderungen zu.

Das Umfeld des Schweißbades bewegt sich mit diesem in Richtung der Schweißnahtverbindung fort, d.h. wenn das Schweißbad entsprechend der Relativbewegung von Schweißlichtbogen zu Werkstücken weiterwandert, bewegt sich das Umfeld des Schweißbades synchron, so dass die relative Position des Umfeldes des Schweißbades zum Schweißbad selbst unverändert bleibt.

Relative Bewegung von Schweißlichtbogen zu dem ersten und zweiten Werkstück meint in der vorliegenden Erfindung eine Bewegung des Schweißkopfes und des von ihm erzeugten Schweißlichtbogens gegenüber feststehenden bzw. unbeweglichen Werkstücken oder eine Bewegung, insbesondere eine Rotation, der Werkstücke gegenüber einem feststehenden bzw. unbeweglichen Schweißkopf bzw. Schweißlichtbogen.

Es kann mit einer oszillierenden Schweißkopfbewegung geschweißt werden, wobei Pendelbreite und Pendelgeschwindigkeit der oszillierenden Schweißkopfbewegung sowie die Form der Bewegung, z. B. offenes oder geschlossenes Dreieck, zu wählen sind.

In Abhängigkeit von der gemessenen Temperatur, die an die Regelungseinrichtung übertragen wird, generiert diese Regelungseinrichtung ein oder mehrere Signale, mit denen ein oder mehrere Schweißparameter gesteuert werden. Die Signale können, wie dem Fachmann ersichtlich, verschiedener Art sein, z. B. optisch, akustisch oder elektrisch.

In Abhängigkeit von dem Signal insbesondere dem Signalwert oder der zeitlichen Veränderung des Signalwerts verändert die Regelungseinrichtung einen oder mehrere Schweißparameter, wie Schweißleistung, insbesondere Stromstärke, oder die Geschwindigkeit der Relativbewegung von Schweißlichtbogen zu den Werkstücken. Beispielsweise kann, wenn die Temperaturmessvorrichtung eine steigende Temperatur liefert, die Schweißleistung reduziert werden, um auch die Temperatur wieder zu reduzieren. Alternativ oder zusätzlich kann die Geschwindigkeit der Relativbewegung von Schweißlichtbogen zu Werkstücken erhöht werden. Auf diese Art und Weise ist es mit der erfindungsgemäßen Vorrichtung möglich, eine annähernd konstante Temperatur im Umfeld des Schweißbades aufrecht zu erhalten. Da die im Umfeld des Schweißbades gemessene Temperatur einen Rückschluss auf die Schweißbadtemperatur selbst zulässt, und diese wiederum die Qualität der Schweißnaht bestimmt, kann mit dem erfindungsgemäßen Verfahren eine Verbesserung der Qualität der Schweißnaht erreicht werden. Störgrößeneinflüsse, wie z.B. Abweichungen in Materialgeometrie oder - gefüge, führen zu einer Veränderung der Temperatur des Schweißbades und seines Umfelds während des Schweißprozesses, so dass mit der erfindungsgemäßen Vorrichtung die Einflüsse solcher Störgrößen verringert werden können.

Die Erfindung hat den Vorteil, dass beim Orbitalschweißen eine Regelung der Schweißparameter unabhängig von der Schweißposition möglich ist, d.h. auf eine aufwändige segmentweise Vorprogrammierung und die Festlegung und Einhaltung einer bestimmten Startposition verzichtet werden kann. Dies erlaubt in der Praxis eine wesentlich größere Flexibilität, da es häufig - gerade im Einbauzustand von Rohren - nicht möglich ist, eine vordefinierte Startposition einzuhalten.

Zur berührungslosen Temperaturmessung im Umfeld des Schweißbades kommt in einer erfindungsgemäßen Fortbildung ein Pyrometer als Temperaturmessvorrichtung zum Einsatz. Ein solches Strahlungsthermometer erfasst die im Umfeld des Schweißbades emittierte Infrarotstrahlung und wertet sie aus, um einen Temperaturmesswert zu erhalten. Eine berührungslose Temperaturmessung ist insbesondere von Vorteil, um weder Fügeprozess noch Schweißbad, Werkstücke, Zusatzwerkstoffe, Schweißnaht oder Werkzeuge zu beeinträchtigen.

In weiteren Varianten kann die Erfindung fortgebildet werden, indem die Temperaturmessvorrichtung so angeordnet ist, dass die Temperatur an zumindest einem Temperaturmesspunkt vor, neben und/oder hinter dem Schweißbad gemessen wird. Eine weitere Fortbildungsform sieht vor, dass die Temperaturmessvorrichtung so angeordnet ist, dass sie einen Bereich umfasst, dessen Temperatur einen Rückschluss auf die Schweißbadtemperatur zulässt. Die Erfindung kann fortgebildet werden, indem die Temperaturmessvorrichtung so angeordnet ist, dass zumindest ein Temperaturmesspunkt einen Mindestabstand zum Schweißbad aufweist, insbesondere einen Abstand von 2 bis 8mm. Dies ist insbesondere wichtig, um die Funktionsfähigkeit des Pyrometers nicht zu beeinträchtigen, da eine korrekte Temperaturmessung mit dem Pyrometer nur außerhalb des Schweißbades möglich ist. Der Mindestabstand soll sicherstellen, dass der Temperaturmesspunkt immer außerhalb des Schweißbades, insbesondere auf der das Schweißbad umgebenden Werkstückoberfläche, liegt.

Die Erfindung kann weiterhin dadurch fortgebildet werden, dass das Schweißgerät eine Abstandsmessvorrichtung zur Messung der Auftragshöhe bzw. Einsenktiefe der Schweißnaht und eine Regelungseinrichtung umfasst, wobei die Regelungseinrichtung ausgebildet ist, in Abhängigkeit von der gemessenen Auftragshöhe bzw. Einsenktiefe zumindest ein Signal zu generieren, welches zur Steuerung von zumindest einem Schweißparameter dient.

Mit Auftragshöhe bzw. Einsenktiefe wird in der vorliegenden Erfindung der Abstand in Werkstückdickenrichtung von der Werkstückoberfläche zu der durch Abkühlung des Schweißbades entstandenen Schweißnaht bezeichnet. Dieses Maß kann als Indikator der Qualität der Schweißverbindung genutzt werden, beispielsweise für den Durchhang der Schweißnaht. Beispielsweise ist es möglich, eine gewollte Auftragshöhe bzw. Einsenktiefe zu bestimmen, und die Schweißparameter, wie beispielsweise Stromstärke und/oder Geschwindigkeit der Relativbewegung von Schweißlichtbogen zu Werkstücken, so zu erhöhen oder zu verringern, dass die gemessene Auftragshöhe bzw. Einsenktiefe mit dem vorbestimmten Wert übereinstimmt. Mit der Steuerung von Schweißparametern in Abhängigkeit der Auftragshöhe bzw. Einsenktiefe, ist es möglich, eine annähernd konstante Auftragshöhe bzw. Einsenktiefe der Schweißnaht über die gesamte Länge der Schweißverbindung zu erreichen. Auf diese Art und Weise kann mit der erfindungsgemäßen Vorrichtung die Qualität der Schweißnaht beeinflusst werden.

Die Erfindung kann dadurch fortgebildet werden, dass die Abstandsmessvorrichtung ausgebildet ist, die Auftragshöhe bzw. Absenktiefe zu ermitteln, indem
- der Abstand der Werkstückoberfläche relativ zu der Messvorrichtung ermittelt wird,
- der Abstand der Schweißnahtoberfläche relativ zu der Messvorrichtung ermittelt wird, und
- der Abstand von der Werkstückoberfläche zu der Schweißnahtoberfläche in Werkstückdickenrichtung als Differenz der beiden ermittelten Abstände berechnet wird.

Diese Abstandsermittlung ermöglicht es, die Auftragshöhe bzw. Absenktiefe der Schweißnaht mit bekannten Abstandsmessvorrichtungen auf einfache und effiziente Art zu ermitteln. Dabei kann die Abstandsmessvorrichtung Mittel zur separaten Ermittlung der beiden Abstände sowie Mittel zur Ermittlung der Differenz der Abstände beinhalten und direkt den Differenzwert der beiden Abstände als Auftragshöhe bzw. Absenktiefe ausgeben.

Eine weitere Fortbildung der Erfindung sieht vor, dass die Regelungseinrichtung ausgebildet ist, die Schweißleistung und/oder die Relativgeschwindigkeit zwischen Schweißlichtbogen und den Werkstücken in Abhängigkeit von dem Signal bzw. den Signalen zu verändern.

Diese Regelungseinrichtung ermöglicht die Regelung des Schweißprozesses im Sinne eines Regelkreises. Der Schweißprozess selbst, d.h. das Fügen der zu verschweißenden Werkstücke, wird in eine Regelstrecke eingebunden, d.h. ein System, dessen Ausgangsgröße geregelt wird, indem eine oder mehrere Eingangsgrößen verändert werden. Regelgrößen, die auf einem vorgegebenen konstanten oder veränderlichen Wert gehalten werden sollen, sind in der vorliegenden Erfindung die vorgenannte gemessene Temperatur, die einen Rückschluss auf die Schweißbadtemperatur zulässt, und/oder die vorgenannte gemessene Auftragshöhe bzw. Einsenktiefe der Schweißnaht. Diese Regelgrößen werden als Ist-Werte des Schweißprozesses gemessen.

Als Führungsgrößen bzw. Soll-Werte werden Größen vorgegeben, die mit den Regelgrößen (Ist-Werten) verglichen werden. Erfindungsgemäß sind dies eine Temperaturvorgabe für das Umfeld des Schweißbads und/oder eine Abstandsvorgabe von Werkstückoberfläche zu Schweißnahtoberfläche (Auftragshöhe bzw. Einsenktiefe). Es ist auch möglich, einen Temperatur- und/oder Abstandsbereich vorzugeben, der einen Toleranzbereich darstellt, innerhalb dessen die gemessene Temperatur bzw. der gemessene Abstand schwanken darf.

Die erfindungsgemäße Regelungseinrichtung ist ein System, das Regel- und Führungsgrößen miteinander vergleicht und aus der Differenz eine oder mehrere Stellgrößen bildet. Eine Stellgröße ist eine Größe, durch deren Änderung die Regelgröße über die Regelstrecke beeinflusst werden kann; sie ist die Ausgangsgröße der Regelungseinrichtung.

In der vorliegenden Erfindung werden in der Regelungseinrichtung die Temperatur- bzw. Abstandsvorgabe als Führungsgrößen bzw. Soll-Werte mit den aktuell gemessenen Temperatur- bzw. Abstands-Ist-Werten verglichen. Stimmen diese Ist-Werte mit den Soll-Werten nicht überein bzw. über- bzw. unterschreiten die Ist-Werte die obere bzw. untere Toleranzgrenze des Soll-Bereichs, ermittelt die Regelungseinrichtung eine oder mehrere Stellgrößen zur Verringerung dieser Abweichung bzw. zur Rückführung der Ist-Werte in den Toleranzbereich.

In der vorliegenden Erfindung sind die Stellgrößen die Schweißleistung und/oder die Relativgeschwindigkeit zwischen Schweißlichtbogen und den Werkstücken, d.h. entweder die Geschwindigkeit des Schweißkopfvorschubs bei beweglichen Schweißgeräten oder die Geschwindigkeit der Werkstückbewegung bei feststehenden Schweißgeräten bzw. -anlagen mit beweglichen Werkstücken, wie z.B. Orbitalschweißanlagen mit rotierenden zu verschweißenden Rohren. Sowohl eine Veränderung der Schweißleistung, insbesondere der Stromstärke, als auch eine Veränderung der Geschwindigkeit, mit der der am Schweißkopf ansetzende Schweißlichtbogen relativ zu den Werkstücken bewegt wird, beeinflussen den Schweißprozess, d.h. die Ausbildung des Schweißbades und die Qualität der Schweißnaht.

Je nach festgestellter Abweichung von Soll- und Ist-Werten, wird in der Regelungseinrichtung ein Wert generiert, um den eine der Stellgrößen verändert werden muss, um die Abweichung zu verringern oder zu beseitigen. Die Relation zwischen der ermittelten Abweichung und der zu verändernden Stellgröße lässt sich empirisch durch Vorversuche ermitteln und abspeichern und/oder anhand verschiedener Parameter, wie Materialart und -geometrie, ableiten.

Zur Ansteuerung der Stellgrößen ist die Regelungseinrichtung vorteilhafterweise mit einer Schweißstromquelle zur Regelung der Schweißleistung, insbesondere der Stromstärke, und/oder mit einer Antriebsvorrichtung zur Regelung des Schweißkopfvorschubs oder mit einer Antriebsvorrichtung zur Regelung der Werkstückbewegung verbunden.

Alle weiteren Größen und Einflüsse, die auf die Regelgrößen Temperatur oder Auftragshöhe bzw. Einsenktiefe wirken, mit Ausnahme der Stellgrößen Schweißleistung bzw. Relativgeschwindigkeit, sind Störgrößen.

Die Erfindung kann dadurch fortgebildet werden, dass zur Erzeugung der Relativbewegung zwischen Schweißlichtbogen und den Werkstücken die Werkstücke relativ zu dem von dem feststehenden Schweißgerät erzeugten Schweißlichtbogen bewegt werden, insbesondere die Werkstücke als Rohre ausgebildet sind und rotieren.

Es ist zu erkennen, dass das erfindungsgemäße Schweißgerät in einer Vielzahl von Anwendungen zum Einsatz kommen kann, beispielsweise als bewegliches Handschweißgerät, als automatisierte Orbitalschweißzange, in einem Schweißroboter, in einer feststehenden Schweißanlage mit beweglichen Werkstücken oder anderen Anwendungen. Ebenso kann das erfindungsgemäße Schweißgerät zur Erzeugung von Schweißnähten aller Art und in allen Positionen, z.B. Überkopfschweißen, Steig-/Fall-/Quernähte, horizontale Kehlnähte, waagrechte Stumpf- und Kehlnähte in Wannenlage, zum Einsatz kommen.

Die Erfindung kann weiterhin fortgebildet dadurch werden, dass die Regelungseinrichtung
- Mittel zum Eingeben einer Solltemperatur und/oder eine Soll-Auftragshöhe bzw. Soll-Einsenktiefe,
- Mittel zum Vergleichen der gemessenen Temperatur und/oder der gemessenen Auftragshöhe bzw. Einsenktiefe mit der Solltemperatur bzw. der Soll-Auftragshöhe bzw. Soll-Einsenktiefe,
- Mittel zum Feststellen einer Abweichung der gemessenen Temperatur von der Solltemperatur bzw. einer Abweichung der gemessenen Auftragshöhe bzw. Einsenktiefe von der Soll-Auftragshöhe bzw. Soll-Einsenktiefe,
- Mittel zum Regeln der Schweißleistung und/oder Relativgeschwindigkeit solcherart, dass die Abweichung bzw. die Abweichungen minimiert wird bzw. werden.
umfasst.

Die genannten Mittel dienen dazu, dass die Regelungseinrichtung die beschriebene Aufgabe als Regler im Regelkreis wahrnehmen kann und sowohl Ist- und Soll-Werte miteinander vergleichen und in Abhängigkeit von der Abweichung entsprechende Veränderungen der Schweißleistung und/oder Relativgeschwindigkeiten ermitteln und die Schweißparameter entsprechend steuern kann.

Das erfindungsgemäße Schweißgerät kann weiterhin dadurch fortgebildet werden, dass die Regelungseinrichtung
- Mittel zum Eingeben eines auf Material und/oder Materialgeometrie, insbesondere Materialstärke, der zu schweißenden Werkstücke bezogenen ersten bzw. zweiten Parameters, und
- Mittel zum Ableiten einer Solltemperatur und/oder einer Soll-Auftragshöhe bzw. Soll-Einsenktiefe aus dem ersten bzw. zweiten Parameter
umfasst.

Diese Parameter können beispielsweise auf Werkstückdicke, besondere Schweißeigenschaften der Materialien oder auf besondere Schweißaufgaben, wie z. B. Fallnähte, bezogen sein. Entsprechend dieser Parameter können Soll-Werte für Temperatur und/oder Auftragshöhe bzw. Einsenktiefe als Führungsgrößen abgeleitet werden. Diese Ableitung kann auf empirisch ermittelten Werten im Schweißen mit bestimmten Parameterkombinationen bestehen und/oder aufgrund von Ableitungsregeln, wie z. B. bestimmte Soll-Temperatur für bestimmte Materialkombination, ermittelt werden.

Eine weitere erfindungsgemäße Fortbildung des Schweißgerätes sieht vor, dass das Schweißgerät eine Speichereinheit umfasst, die ausgebildet ist, eine Vielzahl von Solltemperaturen und/oder Soll-Auftragshöhen bzw. Soll-Einsenktiefen bereitzustellen, wobei jede Solltemperatur bzw. jede Soll-Auftragshöhe bzw. Soll-Einsenktiefe einem bestimmten Material, einer Materialgeometrie, insbesondere Materialstärke, und/oder einer Kombination von Material und Materialgeometrie zugeordnet ist.

Durch das strukturierte Ablegen der Soll-Werte in Abhängigkeit von Materialwerten in der Speichereinheit ist es möglich, für eine Vielzahl von Schweißaufgaben und Werkstückmaterialien Soll-Werte für Temperaturen und/oder Auftragshöhen bzw. Einsenktiefen einfach und effizient zu sammeln, bereitzustellen, auszulesen und zum Regeln des Schweißprozesses zu verwenden. Die in der Speichereinheit abgelegten Werte und Kombinationen können weiterentwickelt, aktualisiert und/oder überschrieben werden. Dadurch kann neuen Erkenntnissen hinsichtlich der steuerungstechnischen Zusammenhänge, besserer Materialkenntnissen oder weiterer Erfahrungswerte Rechnung getragen werden.

Das erfindungsgemäße Schweißgerät kann dadurch fortgebildet werden, dass die Solltemperatur über eine zu schweißende Strecke variabel ist.

Der Wärmefluss beim Orbitalschweißen von Rohren unterscheidet sich vom Wärmefluss beim linearen Schweißen deutlich: Im oberen Kreisabschnitt (Schweißpositionen ca. von 11 bis 1 Uhr) beispielsweise, kann die eingebrachte Wärme nach oben entweichen, und die Werkstücke werden weniger stark erhitzt als im unteren Kreisabschnitt (Schweißpositionen ca. von 5 bis 7 Uhr), wo die Wärme gegen die Werkstücke aufsteigt und diese zusätzlich erwärmt. Dies führt beispielsweise dazu, dass bei einer Startposition von ca. 3 Uhr und einer Schweißrichtung im Uhrzeigersinn die Temperatur schneller bzw. stärker ansteigt als bei einer Startposition von ca. 9 Uhr und einer Schweißrichtung im Uhrzeigersinn. Weiterhin führt der kreisförmige Querschnitt der Werkstücke dazu, dass beim Schließen der Orbitalschweißnaht die letzten zu schweißenden Segmente der Werkstücke bereits bei Beginn des Schweißvorgangs erhitzt wurden und die Schweißstelle somit in diesem Bereich der Werkstücke einem Wärmefluss aus zwei Richtungen ausgesetzt sind.

Je nach Schweißposition und vorhergehendem Schweißprozessverlauf unterscheiden sich daher die vorherrschenden Temperaturverhältnisse erheblich, insbesondere, wenn der Startpunkt für den Schweißprozess beliebig gewählt werden kann. Ein über eine zu schweißende Strecke variabeler Verlauf der Soll-temperatur bedeutet daher, beispielsweise je nach Schweißposition und/oder vorhergehendem Schweißprozessverlauf unterschiedliche Solltemperaturen für unterschiedliche Segmente bzw. Schweißnahtabschnitte vorzugeben.

Insbesondere ist es bevorzugt, dass die Temperaturmessvorrichtung so angeordnet ist, dass die Temperatur an zumindest einem Temperaturmesspunkt in Schweißrichtung hinter dem Schweißbad gemessen wird. Diese erfindungsgemäße Fortbildung hat den Vorteile einen zusätzlichen Wärmefluss, insbesondere einen beispielsweise beim Schließen der Orbitalschweißnaht vom Nahtbeginn ausgehenden Wärmefluss zumindest teilweise kompensieren zu können, indem die Temperatur in Schweißrichtung hinter dem bereits aufgeschmolzenen Bad gemessen wird.

Das erfindungsgemäße Schweißgerät kann weiter dadurch fortgebildet werden, dass das Schweißgerät einen Gravitationssensor zur Detektion einer Schweißposition umfasst und die Regelungseinrichtung ausgebildet ist, in Abhängigkeit von der ermittelten Schweißposition zumindest ein Signal zu generieren, welches zur Steuerung von zumindest einem Schweißparameter dient. Die Steuerung von zumindest einem Schweißparameter hängt vorzugsweise auch von der Schweißposition ab. Mit der erfindungsgemäßen Fortbildung kann die Schweißposition vorteilhafterweise über einen Sensor ermittelt werden, ohne dass eine bestimmte Startposition festgelegt und eingehalten werden muss.

Dabei ist insbesondere bevorzugt, wenn die Solltemperatur über die zu schweißende Strecke in Abhängigkeit von der mittels des Gravitationssensors ermittelten Schweißposition variabel ist.

Das erfindungsgemäße Schweißgerät kann dadurch fortgebildet werden, dass die Regelungseinrichtung ausgebildet ist, ein optisches und/oder akustisches Signal zu generieren, insbesondere ein Warnsignal bei Überschreiten und/oder Unterschreiten einer bestimmten Temperatur bzw. einer bestimmten Auftragshöhe bzw. Einsenktiefe und/oder ein Hinweissignal zur Verringerung oder Erhöhung von Schweißleistung und/oder Relativgeschwindigkeit in Abhängigkeit von der gemessenen Temperatur bzw. der gemessenen Auftragshöhe bzw. Einsenktiefe.

Die Generierung eines optischen und/oder akustischen Signals kann insbesondere dazu dienen, dem Bediener eines erfindungsgemäßen Schweißgeräts Hinweise zur korrekten Bedienung bzw. Hinweise zur Verbesserung des Schweißprozesses zu geben. Ein optisches Signal kann beispielsweise in Analogie zu einer Ampel ausgebildet sein, wobei eine grüne Anzeige einen optimal verlaufenden Schweißprozess indiziert, ein gelbes Signal eine Abweichung von Ist- zu Soll-Werten in einem bestimmten Bereich indiziert und ein rotes Signal ein Überschreiten der Abweichung eines bestimmten Wertes oder ein Über- bzw. Unterschreiten einer bestimmten Temperatur bzw. einer bestimmten Auftragshöhe bzw. Einsenktiefe indiziert. Gleichzeitig kann das Signal mit Hinweisen zur Verringerung oder Erhöhung der Schweißleistung und/oder Relativgeschwindigkeit gekoppelt sein, um die Abweichung von Soll- und Istwerten zu verringern, beispielsweise durch Pfeil- oder Richtungsangaben. Akustische Signale können mit den gleichen Zielen generiert werden und ebenfalls unterschiedliche Ausbildungen annehmen.

Diese optischen oder akustischen Warn- bzw. Hinweissignale erleichtern die Schweißarbeit für den Bediener, können das Schweißergebnis verbessern und können insbesondere in der Schweißausbildung vorteilhaft eingesetzt werden.

Das erfindungsgemäße Schweißgerät kann durch eine mechanische oder elektronische Höhenregelungseinrichtung fortgebildet werden, die ausgebildet ist, den Abstand zwischen Schweißkopf und Werkstückoberfläche bzw. Schweißnaht zu regeln, insbesondere konstant zu halten. Dadurch kann sichergestellt werden, dass sich der Schweißkopf während des Schweißvorgangs immer in gleicher Höhe über der Werkstückoberfläche bzw. Schweißnaht befindet. Die Höhenregelungseinrichtung kann beispielsweise durch einen mechanischen Abstandshalter realisiert sein oder als elektronisch gesteuerte Regelungseinrichtung zum Ermitteln des Abstands zwischen Schweißkopf und Werkstückoberfläche bzw. Schweißnaht, Vergleichen dieses Abstands mit einem vorgegebenen Soll-Abstand und Verändern des Abstands zwischen Schweißkopf und Werkstückoberfläche bzw. Schweißnaht zur Reduzierung bzw. Minimierung der Abweichung zwischen ermitteltem und vorgegebenem Abstand ausgebildet sein.

Weiterhin kann ein Schweißgerät zur Orbitalverschweißung von Rohren, umfassend
- einen Schweißzangenkörper, der mit einem ersten und/oder zweiten zu verschweißenden Rohr solcherart lösbar verbindbar ist, dass der Schweißzangenkörper das Rohr benachbart zu einem ringförmigen Fügebereich zwischen dem ersten und zweiten Rohr umgibt und ein bestimmter Abstand von dem Schweißzangenkörper zu dem Fügebereich entsteht,
- einen Schweißkopf, der ausgebildet ist, einen Schweißlichtbogen mit einer Schweißleistung auf eine Fügestelle im Fügebereich zwischen dem ersten und zweiten Rohr zur Erzeugung eines Schweißbades aufzubringen,
- wobei der Schweißkopf solcherart mit einer Vorschubvorrichtung verbunden ist, dass der Schweißkopf mit einer bestimmten Geschwindigkeit auf einer im Wesentlichen kreisförmigen, dem ringförmigen Fügebereich folgenden Bahn um das erste und zweite Rohr bewegbar ist,
erfindungsgemäß dadurch fortgebildet werden, dass
- benachbart zum Schweißkopf ein Pyrometer zur Messung einer Temperatur im Umfeld des Schweißbades angeordnet und synchron mit dem Schweißkopf durch die Vorschubvorrichtung bewegbar ist,
- eine Regelungsvorrichtung bereitgestellt ist, welche ein Signal von dem Pyrometer erhält und ausgebildet ist, um die Schweißleistung und/oder die Schweißkopfgeschwindigkeit in Abhängigkeit von dem Signal bzw. den Signalen zu verändern.

Insbesondere beim Orbitalschweißen mit komplexen Wechseln von anspruchsvollen Schweißpositionen, wie z.B. waagerechte Schweißpositionen, Fall- und Steignähte sowie Überkopfpositionen, ist die erfindungsgemäße Ausbildung des Schweißgerätes von Vorteil. Indem das Pyrometer benachbart zum Schweißkopf angeordnet ist und sich synchron mit diesem bewegt, erfolgt die Anwendung der erfindungsgemäßen Orbitalschweißzange im Prinzip - mit Ausnahme der Steuerung - wie die einer herkömmlichen Orbitalschweißzange in offener oder geschlossener Bauweise.

Der Antrieb von Schweißkopf und Pyrometer kann vorteilhafterweise so ausgebildet sein, dass sowohl Schweißkopf als auch Pyrometer benachbart zueinander auf einem Zahnkranz angeordnet sind, der über einen Elektromotor angetrieben wird. Der Elektromotor kann feststehend, beispielsweise am Zangenkörper, angeordnet sein. Zur Regelung der Schweißkopfvorschubgeschwindigkeit ist der Elektromotor mit der Regelungseinrichtung verbunden und kann von dieser als Stellgröße einen Wert zur Verringerung oder Steigerung der Antriebsgeschwindigkeit erhalten.

Weiterhin ist es vorteilhaft, wenn der Zahnkranz unterteilt ist, so dass der Zahnkranz zur Positionierung der Schweißzange um die zu verschweißenden Rohre aufgeklappt werden kann. Während des Schweißvorgangs wird der Zahnkranz geschlossen und so gegen Verunreinigungen und Stoß geschützt.

Durch die temperaturgesteuerte Schweißleistung bzw. die temperaturgesteuerte Vorschubgeschwindigkeit wird eine Schweißnaht mit über den Rohrumfang konstanten Eigenschaften und damit gleichbleibend hoher Qualität erzeugt.

Das erfindungsgemäße Schweißgerät und seine Fortbildungen können vielfältig ausgebildet sein und in einer Reihe von Schweißanwendungen zum Einsatz kommen, wie z. B. in Schweißanlagen mit feststehendem Schweißgerät bzw. Schweißkopf und beweglichen bzw. drehenden Werkstücken oder als Orbitalschweißzange zum Verbinden von Rohren. Ebenso kann das erfindungsgemäße Schweißgerät zur Erzeugung von Schweißnähten aller Art und in allen Positionen, z.B. Überkopfschweißen, Steig-/Fall-/Quernähte, horizontale Kehlnähte, waagrechte Stumpf- und Kehlnähte in Wannenlage, zum Einsatz kommen.

Eine erfindungsgemäße Fortbildung sieht vor, ein erfindungsgemäßes Schweißgerät zum Schweißen von Rohren, insbesondere zum automatisierten oder teilautomatisierten WIG-Orbitalschweißen, zu verwenden. Ein erfindungsgemäßes Schweißgerät kann beispielsweise in Orbitalschweißzangen zum Einsatz kommen, die einen automatisiert umlaufenden Schweißkopf besitzen. Ebenso ist ein Einsatz beispielsweise in einer feststehenden Orbitalschweißanlage, bei der die zu verschweißenden Rohre relativ zum Schweißkopf bewegt werden, möglich.

Die Erfindung betrifft weiterhin ein Verfahren zur Steuerung eines Lichtbogen-Schweißgerätes mit den Schritten:
- Erzeugen eines Schweißbades an einer Fügestelle zwischen dem ersten und zweiten Werkstück,
- Bewegen des Schweißlichtbogens relativ zur Fügestelle zwischen dem ersten und zweiten Werkstück
- Regeln einer Schweißleistung eines Schweißlichtbogens und/oder einer Relativgeschwindigkeit zwischen dem Schweißlichtbogen und dem ersten und zweiten Werkstück,
gekennzeichnet durch die Schritte
- Messen der Temperatur im Umfeld eines Schweißbades,
- Generieren von zumindest einem Signal in Abhängigkeit von der gemessenen Temperatur,
- Regeln der Schweißleistung und/oder Relativgeschwindigkeit in Abhängigkeit des Signals.

Das erfindungsgemäße Verfahren kann fortgebildet werden nach den Ansprüchen 10 bis 17. Diese fortgebildeten Verfahren weisen Merkmale bzw. Verfahrensschritte auf, die sie insbesondere dafür geeignet machen, für ein erfindungsgemäßes Schweißgerät und seine Fortbildungen verwendet zu werden. Zu den Ausführungsformen, spezifischen Merkmalen, Varianten und Vorteilen der Merkmale dieses Verfahrens und der Verfahrensfortbildungen wird auf die vorangegangene Beschreibung zu den entsprechenden Vorrichtungsmerkmalen verwiesen.

Weitere Maßnahmen, die zur vorteilhaften Ausgestaltung der Erfindung dienen können, sind in den nachfolgenden Beschreibungen der Ausführungsbeispiele angeführt.
- Fig. 1: zeigt das Umfeld eines von einem Schweißbrenner erzeugten Schweißbades bei der Verbindung zweier Werkstücke durch eine Schweißnaht,
- Fig. 2: zeigt den Schweißprozess im erfindungsgemäßen Regelkreis, und
- Fig. 3: zeigt eine erfindungsgemäße Orbitalschweißzange.

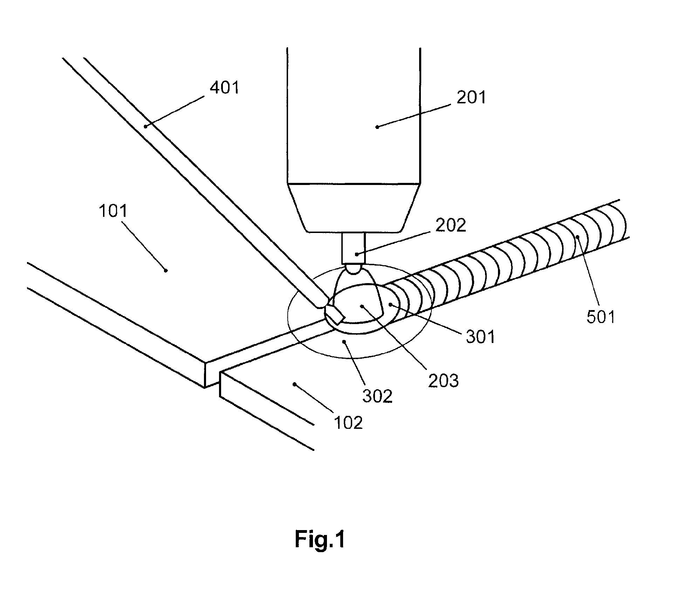

Figur 1 zeigt zwei miteinander zu verschweißende Werkstücke 101 und 102, einen Schweißbrenner 201 mit einer Elektrode 202, einen Schweißstab 401, ein von einem Lichtbogen 203 erzeugtes Schweißbad 301 sowie eine durch Erkalten des Schweißbades 301 entstandene Schweißnaht 501.

Zur vereinfachten Darstellung ist in Figur 1 anstelle eines gekrümmten Ausschnitts einer Orbitalschweißnaht ein linearer Ausschnitt der Schweißnaht dargestellt.

Aus Figur 1 wird deutlich, dass ein temperaturbeeinflusstes Umfeld 302 des Schweißbades 301 einen größeren Bereich als das Schweißbad 301 umfasst und insbesondere konzentrisch zu diesem ausgebildet sein kann. Das Verhältnis der Größe des Umfeldes 302 des Schweißbades 301 zum Schweißbad 301 kann variieren, insbesondere ist ein Verhältnis von ca. 3:2 von Umfelddurchmesser zu Schweißbaddurchmesser die Regel.

Die Form des Umfeldes des Schweißbades 302 ist ebenfalls variabel. Beispielsweise kann der zur Temperaturmessung herangezogene Bereich im Umfeld des Schweißbades auch oval, elliptisch oder linsenförmig ausgebildet sein. Insbesondere kann der Bereich vor, hinter und/oder neben dem Schweißbad 301 besonders ausgeprägt sein oder sich ausschließlich dort befinden. Wichtig ist, dass die im Temperaturmesspunkt abgegriffene Temperatur von der Schweißbadtemperatur beeinflusst wird und einen Rückschluss auf diese zulässt.

Zudem wandert das Umfeld mit der Fortbewegung des Schweißbades entlang der Fügestelle mit, so dass keine Bewegung zwischen Umfeld und Schweißbad stattfindet.

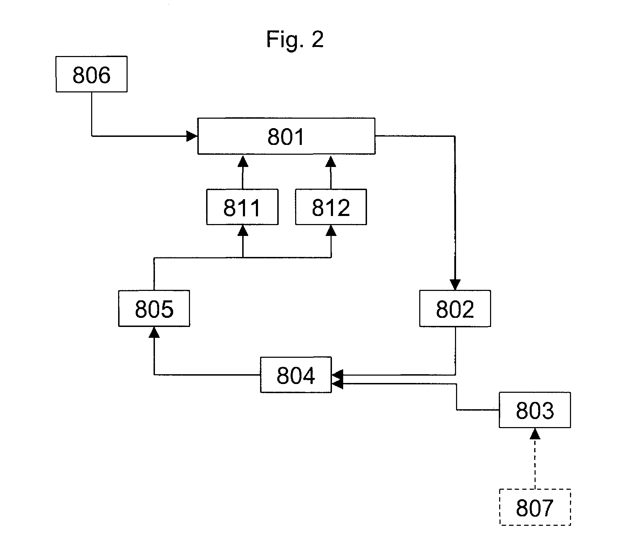

Figur 2 zeigt den Ablauf der Regelung des Schweißprozesses. Das zu regelnde System ist der Schweißprozess 801 selbst, der mit einer Antriebseinheit 811 zum Antreiben des Schweißkopfes und ggf. des Pyrometers oder der Werkstücke sowie einer Schweißstromquelle 812 zur Einstellung einer Schweißleistung verbunden ist.

Als Ist-Werte bzw. Regelgrößen 802, die auf einem vorgegebenen konstanten oder veränderlichen Wert gehalten werden sollen, werden im vorliegenden Ausführungsbeispiel die Temperatur und/oder die Auftragshöhe bzw. Einsenktiefe gemessen. Diese Ist-Werte 802 sind die Eingangsgrößen für die Regelungseinrichtung 804. Die Soll-Angaben zu Temperatur oder Auftragshöhe bzw. Einsenktiefe gehen als Führungsgrößen 803 ebenfalls als Eingangsgrößen in den Regler 804 ein.

Optional können die Führungsgrößen 803 als Soll-Angaben zu Temperatur oder Auftragshöhe bzw. Einsenktiefe aus einer Speichereinheit 807 ausgelesen werden. Die Speichereinheit 807 kann eine Vielzahl von Solltemperaturen und/oder Soll-Auftragshöhen bzw. Soll-Einsenktiefen bereitstellen, wobei jede Solltemperatur bzw. jede Soll-Auftragshöhe bzw. Soll-Einsenktiefe einem bestimmten Material, einer Materialgeometrie, insbesondere Materialstärke, und/oder einer Kombination von Material und Materialgeometrie zugeordnet ist. Über eine Benutzerschnittstelle (nicht dargestellt) können die für die jeweilige Schweißaufgabe zutreffenden Parameter zu den Materialwerten eingegeben werden, anhand derer Solltemperatur bzw. jede Soll-Auftragshöhe bzw. Soll-Einsenktiefe ermittelt werden.

Im Regler 804 findet ein Soll-Ist-Abgleich zwischen Regel- und Führungsgrößen statt, so dass Abweichungen der gemessenen Temperatur von der Soll-Temperatur bzw. von der gemessenen Auftragshöhe bzw. Einsenktiefe zur Soll-Auftragshöhe bzw. Einsenktiefe ermittelt werden. In Abhängigkeit von diesen Abweichungen ermittelt der Regler 804 die Stellgrößen 805, mit denen die Abweichungen verringert bzw. minimiert werden sollen.

Im vorliegenden Ausführungsbeispiel sind diese Stellgrößen 805 die Schweißleistung bzw. Relativgeschwindigkeit zwischen dem Schweißlichtbogen und dem ersten und zweiten Werkstück, insbesondere eine Verringerung oder Erhöhung der Schweißleistung bzw. Relativgeschwindigkeit. Zur Regelung des Schweißprozesses 801 anhand dieser Schweißparameter bzw. Stellgrößen 805 erhält die Antriebseinheit 811 als Eingangsgröße die geschwindigkeitsbezogenen Werte der Stellgrößen 805 und die Schweißstromquelle die schweißleistungsbezogenen Werte der Stellgrößen 805. Durch die gemäß der Stellgrößen 805 veränderte Schweißleistung in der Schweißstromquelle 812 bzw. veränderte Antriebsgeschwindigkeit der Antriebseinheit 811 wird der Schweißprozess 801 so beeinflusst, dass die Ist-Werte 802 eine geringere Differenz zu den Soll-Werten 803 aufweisen.

Weitere Größen oder Einflüsse, wie z.B. Abweichungen in Materialgeometrie oder -gefüge, gehen als Störgrößen 806 ebenfalls als Eingangsgrößen in den Schweißprozess 801 ein.

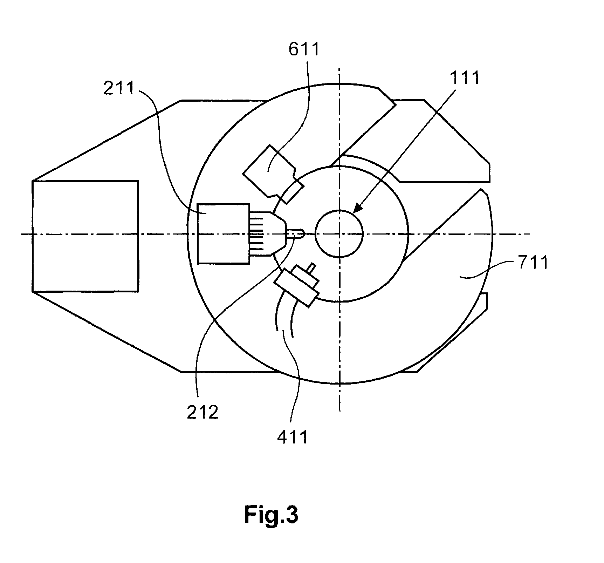

Figur 3 zeigt eine erfindungsgemäße Orbitalschweißzange mit einem Schweißzangenkörper 711, der einen Querschnitt 111 der zu verschweißenden Rohre umfassen und diese fixieren bzw. fix zu ihnen positioniert werden kann.

Die erfindungsgemäße Orbitalschweißzange umfasst weiterhin einen Schweißbrenner 211 mit einer Elektrode 212, wobei der Schweißbrenner über ein Schlauchpaket (nicht dargestellt) mit einer Stromquelle und einer Steuerungsvorrichtung verbunden ist, und durch das Schlauchpaket notwendige Versorgungsleitungen geführt sind, insbesondere Schweißstromleitung, Schutzgaszuführung, Steuerungsleitung und/oder Kühlwasserzu- und -abfluss. Die Schweißdrahtzuführung 411 kann ebenfalls im Schlauchpaket angeordnet sein.

Die erfindungsgemäße Orbitalschweißzange umfasst weiterhin ein Pyrometer 611. Das Pyrometer 611 ist so angeordnet, dass sein Temperaturmessbereich einen Bereich im Umfeld des Schweißbades abdeckt, nicht aber das Schweißbad selbst erfasst, sondern vorteilhafterweise einen Mindestabstand zum Schweißbad aufweist.

Das Pyrometer 611 ist ebenfalls mit der Regelungseinrichtung (nicht dargestellt) verbunden. Schweißbrenner 211 und Pyrometer 611 sind benachbart zueinander auf einem Zahnkranz (nicht dargestellt) angeordnet, der von einem feststehenden Elektromotor (nicht dargestellt) angetrieben wird. Schweißbrenner 211 und Pyrometer 611 werden durch das angetriebene Zahnrad synchron auf einer im Wesentlichen kreisförmigen Bahn um den Rohrquerschnitt bewegt. Dadurch wird sichergestellt, dass der Temperaturmessbereich des Pyrometers 611 synchron zum Schweißbad bewegt wird und sich an einer in Relation zum Schweißbad fixen Position im Umfeld des Schweißbades befindet.

## Patentansprüche

1. Lichtbogen-Schweißgerät,
umfassend einen Schweißkopf zur Aufbringung eines Schweißlichtbogens mit einer Schweißleistung auf eine Fügestelle zwischen einem ersten und zweiten Werkstück zur Erzeugung eines Schweißbades, wobei der Schweißlichtbogen relativ zu dem ersten und zweiten Werkstück bewegbar ist,
**dadurch gekennzeichnet, dass** das Schweißgerät eine Temperaturmessvorrichtung zur Messung einer Temperatur im Umfeld des Schweißbades und eine Regelungseinrichtung umfasst, wobei die Regelungseinrichtung ausgebildet ist, in Abhängigkeit von der gemessenen Temperatur zumindest ein Signal zu generieren, welches zur Steuerung von zumindest einem Schweißparameter dient,
wobei vorzugsweise die Temperaturmessvorrichtung als Pyrometer ausgebildet ist und/oder die Temperaturmessvorrichtung so angeordnet ist, dass die Temperatur an zumindest einem Temperaturmesspunkt vor, neben und/oder hinter dem Schweißbad gemessen wird, wobei vorzugsweise die Temperaturmessvorrichtung so angeordnet ist, dass sie einen Bereich umfasst, dessen Temperatur einen Rückschluss auf die Schweißbadtemperatur zulässt.

2. Schweißgerät nach Anspruch 1 oder dem Oberbegriff von Anspruch 1,
**dadurch gekennzeichnet, dass** das Schweißgerät eine Abstandsmessvorrichtung zur Messung der Auftragshöhe bzw. Einsenktiefe der Schweißnaht und eine Regelungseinrichtung umfasst, wobei die Regelungseinrichtung ausgebildet ist, in Abhängigkeit von der gemessenen Auftragshöhe bzw. Einsenktiefe zumindest ein Signal zu generieren, welches zur Steuerung von zumindest einem Schweißparameter dient, wobei vorzugsweise die Abstandsmessvorrichtung ausgebildet ist, die Auftragshöhe bzw. Absenktiefe zu ermitteln, indem
- der Abstand der Werkstückoberfläche relativ zu der Messvorrichtung ermittelt wird,
- der Abstand der Schweißnahtoberfläche relativ zu der Messvorrichtung ermittelt wird, und
- der Abstand von der Werkstückoberfläche zu der Schweißnahtoberfläche in Werkstückdickenrichtung als Differenz der beiden ermittelten Abstände berechnet wird.

3. Schweißgerät nach einem der vorhergehenden Ansprüche,
**dadurch gekennzeichnet, dass** zur Erzeugung der Relativbewegung zwischen Schweißlichtbogen und den Werkstücken die Werkstücke relativ zu dem von dem feststehenden Schweißgerät erzeugten Schweißlichtbogen bewegt werden, insbesondere die Werkstücke als Rohre ausgebildet sind und rotieren.

4. Schweißgerät nach einem der vorhergehenden Ansprüche,
**dadurch gekennzeichnet, dass** die Regelungseinrichtung umfasst:
- Mittel zum Eingeben einer Solltemperatur und/oder eine Soll-Auftragshöhe bzw. Soll-Einsenktiefe,
- Mittel zum Vergleichen der gemessenen Temperatur und/oder der gemessenen Auftragshöhe bzw. Einsenktiefe mit der Solltemperatur bzw. der Soll-Auftragshöhe bzw. Soll-Einsenktiefe,
- Mittel zum Feststellen einer Abweichung der gemessenen Temperatur von der Solltemperatur bzw. einer Abweichung der gemessenen Auftragshöhe bzw. Einsenktiefe von der Soll-Auftragshöhe bzw. Soll-Einsenktiefe,
- Mittel zum Regeln der Schweißleistung und/oder Relativgeschwindigkeit solcherart, dass die Abweichung bzw. die Abweichungen minimiert wird bzw. werden,
wobei vorzugsweise die Regelungseinrichtung umfasst:
- Mittel zum Eingeben eines auf Material und/oder Materialgeometrie, insbesondere Materialstärke, der zu schweißenden Werkstücke bezogenen ersten bzw. zweiten Parameters,
- Mittel zum Ableiten einer Solltemperatur und/oder einer Soll-Auftragshöhe bzw. Soll-Einsenktiefe aus dem ersten bzw. zweiten Parameter ,
wobei vorzugsweise das Schweißgerät eine Speichereinheit umfasst, die ausgebildet ist, eine Vielzahl von Solltemperaturen und/oder Soll-Auftragshöhen bzw. Soll-Einsenktiefen bereitzustellen, wobei jede Solltemperatur bzw. jede Soll-Auftragshöhe bzw. Soll-Einsenktiefe einem bestimmten Material, einer Materialgeometrie, insbesondere Materialstärke, und/oder einer Kombination von Material und Materialgeometrie zugeordnet ist.

5. Schweißgerät nach dem vorhergehenden Anspruch,
**dadurch gekennzeichnet, dass** die Solltemperatur über eine zu schweißende Strecke variabel ist.

6. Schweißgerät nach einem der vorhergehenden Ansprüche,
**dadurch gekennzeichnet, dass** das Schweißgerät einen Gravitationssensor zur Detektion einer Schweißposition umfasst und die Regelungseinrichtung ausgebildet ist, in Abhängigkeit von der ermittelten Schweißposition zumindest ein Signal zu generieren, welches zur Steuerung von zumindest einem Schweißparameter dient.

7. Schweißgerät nach einem der vorhergehenden Ansprüche zur Orbitalverschweißung von Rohren, umfassend
- einen Schweißzangenkörper, der mit einem ersten und/oder zweiten zu verschweißenden Rohr solcherart lösbar verbindbar ist, dass der Schweißzangenkörper das Rohr benachbart zu einem ringförmigen Fügebereich zwischen dem ersten und zweiten Rohr umgibt und ein bestimmter Abstand von dem Schweißzangenkörper zu dem Fügebereich entsteht,
- einen Schweißkopf, der ausgebildet ist, einen Schweißlichtbogen mit einer Schweißleistung auf eine Fügestelle im Fügebereich zwischen dem ersten und zweiten Rohr zur Erzeugung eines Schweißbades aufzubringen,
- wobei der Schweißkopf solcherart mit einer Vorschubvorrichtung verbunden ist, dass der Schweißkopf mit einer bestimmten Geschwindigkeit auf einer im Wesentlichen kreisförmigen, dem ringförmigen Fügebereich folgenden Bahn um das erste und zweite Rohr bewegbar ist,
**dadurch gekennzeichnet, dass**
- benachbart zum Schweißkopf ein Pyrometer zur Messung einer Temperatur im Umfeld des Schweißbades angeordnet und synchron mit dem Schweißkopf durch die Vorschubvorrichtung bewegbar ist,
- eine Regelungsvorrichtung bereitgestellt ist, welche ein Signal von dem Pyrometer erhält und ausgebildet ist, um die Schweißleistung und/oder die Schweißkopfgeschwindigkeit in Abhängigkeit von dem Signal bzw. den Signalen zu verändern.

8. Verwendung eines Lichtbogen-Schweißgeräts zum Schweißen von Rohren, insbesondere zum automatisierten oder teilautomatisierten WIG-Orbitalschweißen,
**dadurch gekennzeichnet, dass** das Schweißgerät nach einem der vorhergehenden Ansprüche ausgebildet ist.

9. Verfahren zur Regelung eines Lichtbogen-Schweißgerätes mit den Schritten
- Erzeugen eines Schweißbades an einer Fügestelle zwischen dem ersten und zweiten Werkstück,
- Bewegen des Schweißlichtbogens relativ zur Fügestelle zwischen dem ersten und zweiten Werkstück
- Regeln einer Schweißleistung eines Schweißlichtbogens und/oder einer Relativgeschwindigkeit zwischen dem Schweißlichtbogen und dem ersten und zweiten Werkstück,
**gekennzeichnet durch** die Schritte
- Messen der Temperatur im Umfeld eines Schweißbades, insbesondere mittels eines Pyrometers und/oder an zumindest einem Temperaturmesspunkt vor, neben und/oder hinter dem Schweißbad,
- Generieren von zumindest einem Signal in Abhängigkeit von der gemessenen Temperatur,
- Regeln der Schweißleistung und/oder Relativgeschwindigkeit in Abhängigkeit des Signals,
wobei vorzugsweise zumindest ein Temperaturmesspunkt so angeordnet ist, dass die gemessene Temperatur einen Rückschluss auf die Schweißbadtemperatur zulässt.

10. Verfahren nach Anspruch 9 oder dem Oberbegriff des Anspruchs 9,
**gekennzeichnet durch** die Schritte
- Messen der Auftragshöhe bzw. Einsenktiefe der Schweißnaht,
- Generieren von zumindest einem Signal in Abhängigkeit von der gemessenen Auftragshöhe bzw. Einsenktiefe,
- Regeln der Schweißleistung und/oder Relativgeschwindigkeit in Abhängigkeit des Signals bzw. der Signale,
wobei vorzugsweise die Auftragshöhe bzw. Absenktiefe ermittelt wird, indem
- der Abstand der Werkstückoberfläche relativ zu einer Messvorrichtung ermittelt wird,
- der Abstand der Schweißnahtoberfläche relativ zu der Messvorrichtung ermittelt wird,
- der Abstand von der Werkstückoberfläche zu der Schweißnahtoberfläche in Werkstückdickenrichtung als Differenz der beiden ermittelten Abstände berechnet wird.

11. Verfahren nach einem der beiden vorhergehenden Ansprüche,
**gekennzeichnet durch** die Schritte:
- Eingeben einer Solltemperatur und/oder eine Soll-Auftragshöhe bzw. Soll-Einsenktiefe,
- Vergleichen der gemessenen Temperatur und/oder der gemessenen Auftragshöhe bzw. Einsenktiefe mit der Solltemperatur bzw. der Soll-Auftragshöhe bzw. Soll-Einsenktiefe,
- Feststellen einer Abweichung der gemessenen Temperatur von der Solltemperatur bzw. einer Abweichung der gemessenen Auftragshöhe bzw. Einsenktiefe von der Soll-Auftragshöhe bzw. Soll-Einsenktiefe,
- Regeln der Schweißleistung und/oder Relativgeschwindigkeit solcherart, dass die Abweichung bzw. die Abweichungen minimiert wird bzw. werden,
vorzugsweise weiterhin **gekennzeichnet durch** die Schritte:
- Eingeben eines auf Material und/oder Materialgeometrie, insbesondere Materialstärke, der zu schweißenden Werkstücke bezogenen ersten bzw. zweiten Parameters,
- Ableiten einer Solltemperatur und/oder eine Soll-Auftragshöhe bzw. Soll-Einsenktiefe aus dem ersten bzw. zweiten Parameter, und
vorzugsweise weiterhin **dadurch gekennzeichnet, dass** eine Vielzahl von Solltemperaturen und/oder Soll-Auftragshöhen bzw. Soll-Einsenktiefen in einer Speichereinheit bereitgestellt werden und jede Solltemperatur bzw. jede Soll-Auftragshöhe bzw. Soll-Einsenktiefe einem bestimmten Material, einer Materialgeometrie, insbesondere Materialstärke, und/oder einer Kombination von Material und Materialgeometrie zugeordnet ist.

12. Verfahren nach dem vorhergehenden Anspruch,
**dadurch gekennzeichnet, dass** die Solltemperatur über eine zu schweißende Strecke variabel ist.

13. Verfahren nach einem der vorhergehenden Ansprüche 9-12,
**gekennzeichnet durch** die Schritte:
- Ermitteln der Schweißposition über eine Gravitationsmessung,
- Generieren von zumindest einem Signal in Abhängigkeit von der gemessenen Schweißposition,
- Regeln der Schweißleistung und/oder Relativgeschwindigkeit in Abhängigkeit des Signals.

14. Lichtbogen-Schweißverfahren mit den Schritten:
- Bereitstellen eines ersten und eines zweiten miteinander zu verschweißenden Werkstücks,
- Aufbringen eines Schweißlichtbogens mit einer Schweißleistung auf eine Fügestelle zwischen dem ersten und zweiten Werkstück zur Erzeugung eines Schweißbades mittels eines Schweißgeräts,
- Bewegen von Schweißlichtbogen relativ zu dem ersten und zweiten Werkstück,
- **dadurch gekennzeichnet, dass** das Schweißgerät nach einem der vorhergehenden Ansprüche 9-13 geregelt wird.

15. Verfahren nach dem vorhergehenden Anspruch, zum Lichtbogenschweißen von Rohren, insbesondere zum automatisierten oder teilautomatisierten WIG-Orbitalschweißen, mit den Schritten:
- Bereitstellen eines ersten und eines zweiten miteinander zu verschweißenden Rohres,
- Positionieren des ersten und zweiten Rohres zueinander, so dass zwischen dem ersten und zweiten Rohr ein ringförmiger Fügebereich entsteht,
- Bereitstellen einer Orbitalschweißzange umfassend
- einen Schweißzangenkörper, der mit dem ersten und/oder zweiten zu verschweißenden Rohr lösbar verbindbar ist,
- einen mit einer Vorschubvorrichtung verbundenen Schweißkopf,
- Verbinden des Schweißzangenkörpers mit dem ersten und/oder zweiten Rohr solcherart, dass der Schweißzangenkörper das Rohr benachbart zu einem ringförmigen Fügebereich zwischen dem ersten und zweiten Rohr umgibt und ein bestimmter Abstand von dem Schweißzangenkörper zu dem Fügebereich entsteht,
- Aufbringen eines Schweißlichtbogens mit einer Schweißleistung durch den Schweißkopf auf eine Fügestelle im Fügebereich zwischen dem ersten und zweiten Rohr zur Erzeugung eines Schweißbades,
- Bewegen des Schweißkopfs mit einer bestimmten Geschwindigkeit auf einer im Wesentlichen kreisförmigen, entlang des ringförmigen Fügebereichs verlaufenden Bahn,
- **gekennzeichnet durch** die Schritte:
- Bereitstellen eines benachbart zum Schweißkopf auf dem Zahnkranz angeordneten Pyrometers,
- Bewegen des Pyrometers synchron zum Schweißkopf,
- Messen einer Temperatur im Umfeld des Schweißbades mittels des Pyrometers,
- Verändern der Schweißleistung und/oder der Schweißkopfgeschwindigkeit in Abhängigkeit von der gemessenen Temperatur.
